# EUROPÄISCHE PATENTSCHRIFT

(11) **EP 2 702 672 B1**
(45) Veröffentlichungstag und Bekanntmachung des Hinweises auf die Patenterteilung: **05.08.2015**
(21) Anmeldenummer: 12722688.4
(22) Anmeldetag: 27.04.2012
(51) Int. Cl.: H02K 41/03

(54) **HOCHAUFLÖSENDE POSITIONIEREINRICHTUNG**
HIGH-RESOLUTION POSITIONING DEVICE
DISPOSITIF DE POSITIONNEMENT À HAUTE RÉSOLUTION

(30) Priorität: 29.04.2011 DE 102011100153
(43) Veröffentlichungstag der Anmeldung: 05.03.2014
(73) Patentinhaber: Physik Instrumente (PI) GmbH & Co. KG, 76228 Karlsruhe (DE)
(72) Erfinder: SCHÄFFEL, Christoph, 98693 Ilmenau (DE); KATZSCHMANN, Michael, 98693 Ilmenau (DE); MOHR, Hans-Ulrich, 98701 Großbreitenbach (DE); WALENDA, Carolin, 76187 Karlsruhe (DE); GLÖß, Rainer, 76337 Waldbronn (DE); RUDOLF, Christian, 76307 Karlsbad (DE)
(74) Vertreter: Kruspig, Volkmar
(86) Internationale Anmeldenummer: PCT/EP2012/057752
(87) Internationale Veröffentlichungsnummer: WO 2012/146709

(56) Entgegenhaltungen:
- EP-A2- 1 189 018
- WO-A1-00/10242
- DE-A1- 10 054 376
- US-A- 4 857 781
- US-A- 5 925 956

## Beschreibung

Die Erfindung betrifft eine hochauflösende Positioniereinrichtung mit einem Stator und einem Läufer, einem auf dem Stator angeordneten Spulenarray mit wenigstens drei Gruppen von Flachspulen, wobei jede Gruppe mindestens zwei Einzelspulen aufweist und das Spulenarray einen Freiraum auf dem Stator einschließt, weiterhin mit auf, an oder in dem Läufer befindlichen permanentmagnetisch erregten Kreisen, welche ein Magnetarray bilden, das ebenfalls einen Freiraum einschließt, wobei die Freiräume ein Positionsmesssystem aufnehmen, das einen Messkopf mit Sensoren und einen Flächenmaßstab besitzt, gemäß Patentanspruch 1.

Aus der DE 30 37 648 A1 ist ein Zweikoordinatenschrittmotor vorbekannt, bei dem Spulen oder Dauermagnete in einem beweglichen Teil angeordnet sind, welches u.a. durch Magnetschwebung in einer Ebene gelagert ist. Weiterhin sind Rasterplatten, Interferometerspiegel oder andere inkrementelle Geberplatten senkrecht zueinander zur inkrementellen Signalgewinnung und Lageregelung vorhanden. In jeder Bewegungskoordinate des Zweikoordinatenmotors sind mindestens zwei entgegengesetzt polarisierte Dauermagneten auf einer ferromagnetischen Grundplatte und jeweils über den entgegengesetzt polarisierten Dauermagneten ein ferromagnetisches Rückschlussteil angeordnet. In dem Luftspalt zwischen Dauermagneten und Rückschlussteil befindet sich mindestens eine rechteckige Spule mit weit über die Magnetpolbreite ragenden Spulenköpfen. Diese Spulenköpfe befinden sich in einem als Tischplatte ausgebildeten Teil mit den kraftwirksamen Spulensträngen der Tischmitte zugewandt. In der Tischplatte sind neben den der Tischmitte zugewandten Spulensträngen Aussparungen mindestens in der Größe von Verfahrweg und Querschnitt des Rückschlussteils und in der Tischmitte ein Objektträgerteil aus strahlungsdurchlässigem Werkstoff, z.B. Glas vorgesehen. Bei einer Ausführungsform sind mindestens drei rechteckige Spulen mit ihren zugehörigen Paaren von Dauermagneten unter einem Winkel von vorzugsweise 120°, mit den nichtkraftwirksamen Spulenköpfen der Tischmitte zugewandt, angeordnet. Mit dem vorbekannten Zweikoordinatenschrittmotor sollen kleinste Schrittweiten bis unter 1 µm erreicht werden und ein günstiges dynamisches Verhalten gegeben sein.

Bei dem Positioniersystem für eine Lithografieeinrichtung nach EP 1 243 972 A1 findet ein Planarmotor Anwendung, welcher einen Stator sowie einen Läufer aufweist. Der Stator umfasst eine Anordnung von mehreren segmentierten Magneten mit periodischer Polarisation, wobei diese mit Strom beaufschlagbaren Spulen wechselwirken, um die gewünschte Positionierbewegung zu bewirken. Darüber hinaus ist die dortige Lösung durch eine Grobpositioniereinheit gekennzeichnet, welche mit einer Feinpositioniereinrichtung zusammenwirkt, um einerseits größere Verfahrwege schnell zurücklegen zu können sowie andererseits die gewünschten Positioniergenauigkeiten zu erreichen.

Die gattungsbildende DE 100 54 376 A1 zeigt einen elektrodynamischen planaren x-y-φ-Direktantrieb in flacher Bauweise, welcher geringe Normalkraft- und Tangentialkraftschwankungen aufweist. Ein dortiges Regelsystem ist u.a. in der Lage, sowohl die Größe als auch die Position der Lastmasse zu identifizieren. Bei dem Antrieb nach DE 100 54 376 A1 handelt es sich um einen solchen, bei dem Stator und Läufer zueinander Luftlagerpositioniert sind. Auf dem Stator sind paarig gegenüberliegend Spulen aufgebracht und fixiert. Der Läufer besteht aus einem Läuferrahmen, in dessen Zentrum eine Messsystemanordnung vorgesehen ist. Der Läuferrahmen weist an seinen Ecken jeweils eine Luftlagerbefestigung auf, die jeweils eine Luftlagerdüse aufnimmt, und besitzt zwischen den Luftlagerbefestigungen Rahmenstege, die ihrerseits jeweils Rahmenaufnahmen beinhalten, in denen jeweils ein permanentmagnetisch erregter Kreis aufgenommen ist. Die permanentmagnetisch erregten Kreise umfassen jeweils zwei Einzelmagneten, die mit einem Rückschlussjoch gebrückt sind. Der Läufer besitzt an seiner Unterseite in seinem Zentrum eine Aussparung zur Aufnahme einer Maßverkörperung, z.B. gebildet durch einen Flächenmaßstab. Direkt unterhalb der Maßverkörperung befindet sich im Zentrum des Stators eine Abtasteinheit, deren Abtastrasterplatte im vorhandenen Abstand die Maßverkörperung abtastet. Jedes der Sensorfelder von Sensormodulen, bestehend aus Sendern und Empfängern, die eine Bestrahlung durch ein Abtastraster auf die Maßverkörperung und wieder zurück durch das Abtastraster auf die Empfänger gestatten, detektiert die bei Relativbewegung zwischen Maßverkörperung und Abtastraster modulierte Lichtstrahlung und wandelt diese in elektrische Signale um. Durch die vorgesehene optische Abtastung lassen sich Bewegungen in x-y-Richtung und auch Verdrehbewegungen bestimmen. Das Erfassung von Kippbewegungen und/oder Bewegungen in vertikaler, d.h. z-Richtung, ist nicht möglich.

Zum Stand der Technik sei noch auf die DE 195 11 973 A1 verwiesen, die einen planaren Direktantrieb zeigt, welcher aus Antriebsgrundelementen aufgebaut ist, die aus zwei entgegengesetzt polarisierten Magneten bestehen, welche über ferromagnetische Joche und einen ferromagnetischen Stator einen kurzen Magnetkreis bilden. Weiterhin sind Flachspulen auf dem Stator dem Magnetkreis jeweils zugeordnet, wobei Magnete und Joche im Läufer mitbewegt werden. Der Stator der vorbekannten Anordnung trägt symmetrisch gegenüberliegende Paare von Flachspulen, die entsprechend der Position des Läufers kommutiert werden. Eine gegenphasige Bestromung jeweils gegenüberliegender Spulen gestattet die Erzeugung eines Antriebsmoments bezüglich des Massenschwerpunkts des Läufers. Auch der dortige Direktantrieb ist mit einem Messsystem ausgestattet.

Aus dem Vorgenannten ist es Aufgabe der Erfindung, eine weiterentwickelte hochauflösende Positioniereinrichtung mit einem Stator und einem Läufer anzugeben, welche eine Positionierung in sechs Freiheitsgraden ermöglicht. Der Läufer, der eine bewegliche Plattform darstellt, soll frei von elektrischer Verdrahtung sein. Die Positioniergenauigkeit und damit die Bewegungsauflösung soll im unteren Nanometerbereich liegen und vorzugsweise <20 nm sein.

Die Lösung der Aufgabe der Erfindung erfolgt durch die Positioniereinrichtung gemäß der Merkmalskombination nach Anspruch 1, wobei die Unteransprüche mindestens zweckmäßige Ausgestaltungen und Weiterbildungen umfassen.

Die Erfindung geht demnach von einem rein magnetisch geführten und angetriebenen Bewegungssystem aus, wobei die Läuferbewegung ohne jeglichen mechanischen Kontakt zwischen Stator und Läufer auf der Basis magnetischer Feldkräfte erfolgt. Das erfindungsgemäß zum Einsatz kommende Messsystem erfasst alle Bewegungsfreiheitsgrade translatorisch in x-, y- und z-Richtung sowie rotatorisch um die Achsen x, y und z. Damit ist das Messsystem in der Lage, die vertikale Läuferposition und die Läuferkipplage zu erfassen. Die erfindungsgemäße Ausbildung schafft eine ebene Referenzfläche mindestens in der Größe des ebenen Verfahrbereichs des Läufers. Die Referenzfläche bzw. der Flächenmaßstab bzw. die Maßverkörperung ist zur Minimierung von Messfehlern nahe zum bewegenden oder zum vermessenden Objekt angeordnet.

Die vorgeschlagene Positioniereinrichtung besitzt ein auf dem Stator angeordnetes Spulenarray mit wenigstens drei Gruppen von Flachspulen, wobei jede Gruppe mindestens zwei Einzelspulen aufweist. Das Spulenarray schließt einen Freiraum auf dem Stator bzw. der Statoroberfläche ein. Weiterhin sind auf, an oder in dem Läufer permanentmagnetisch erregte Kreise befindlich, welche ein Magnetarray bilden. Dieses Magnetarray schließt ebenfalls einen Freiraum ein. Die vorerwähnten Freiräume nehmen das Positionsmesssystem auf, welches einen Messkopf mit Sensoren und einen Flächenmaßstab besitzt. Die Freiräume sind derart gewählt, dass eine Fläche zur Verfügung steht, die im Wesentlichen der Größe des ebenen Fahrbereichs entspricht.

Die Positioniereinrichtung ist erfindungsgemäß als freischwebender, rein magnetisch geführter sechsdimensionaler Antrieb ausgebildet, wobei sich der Messkopf im Spulenarray-Freiraum und der Flächenmaßstab im Magnetarray-Freiraum befinden. Der Läufer selbst ist frei von antriebsrelevanten und sensorrelevanten elektrischen oder elektronischen und diesbezüglich stromführenden Teilen.

In einer bevorzugten Ausgestaltung besitzt der Messkopf eine an den Spulenarray-Freiraum angepasste, den zur Verfügung stehenden Platz ausnutzende Flächenform.

Weiterhin weist der Messkopf optische Inkrement-Sensoren sowie kapazitive Sensoren auf.

Die kapazitiven Sensoren sind bei einer bevorzugten Ausführungsform im Flächenrandbereich des Messkopfes und weiterhin mindestens ein optischer Sensor im Zentrum des Messkopfes angeordnet. Mit Hilfe der kapazitiven Sensoren kann eine Bewegung in z-Richtung mit einer Auflösung von ca. 1 nm erfasst werden. Ebenso können Kippwinkel und diesbezügliche Bewegungen erfasst werden.

Die optischen Inkrement-Sensoren erfassen die Horizontalbewegungen in x- und y-Richtung sowie Dreh- oder Rotationsbewegungen des Läufers um z.

Die kapazitiven Sensoren bestehen jeweils aus einem Sensorpaar, welche den jeweiligen Abstand zur Oberfläche des Flächenmaßstabs erfassen, um hieraus Winkellagen u, v und Bewegungen in z-Richtung zu erfassen.

Bei einer bevorzugten Ausgestaltung weist der Messkopf die Form eines Dreiecks auf. In den Eckbereichen des Dreiecks befinden sich bei dieser bevorzugten Ausführungsform die paarweise ausgebildeten kapazitiven Sensoren. Bevorzugt im Zentrum des dreieckförmigen Messkopfes sind die optischen Sensoren angeordnet. Vorstehende Maßnahmen sichern die aufgabengemäß geforderte hohe Dynamik und die gewünschte Auflösung in allen Freiheitsgraden.

Die jeweiligen Spulengruppen als Bestandteil des Spulenarrays sind als Baueinheit mit Kühlrohren, eine Sandwichanordnung bildend, ausgeführt.

Die permanentmagnetisch erregten Kreise bestehen aus jeweils einem mehrere Segmente umfassenden Halbach-Array.

Unter Halbach-Array wird eine spezielle Konfiguration von Permanentmagneten verstanden, die es ermöglicht, dass sich der magnetische Fluss an einer Seite der Konfiguration fast aufhebt, an der anderen Seite jedoch verstärkt. Diesbezüglich setzt sich ein Halbach-Array aus Segmenten von Permanentmagneten zusammen, deren Magnetisierungsrichtung gegeneinander jeweils um 90° in Richtung der Längsachse des Arrays gekippt ist. Hierdurch rücken die Feldlinien auf der Seite, in deren Richtung der Direktor des Feldes gekippt wird, enger zusammen. Letzteres bewirkt eine Erhöhung der magnetischen Flussdichte. Auf der gegenüberliegenden Seite liegen die Feldlinien weniger eng als im ungestörten Magneten. Hierdurch wird das Feld schon in geringem Abstand abgeschwächt oder hebt sich auf, da sich Nord- und Südpole jeweils abwechseln. Durch ein Halbach-Array lässt sich die Länge an magnetischem Material bezogen auf die gewünschten Kraftwirkungen reduzieren. Dies wiederum führt zu einer gewünschten Reduzierung der Masse des Läufers, in dem die Magnete integriert bzw. untergebracht sind.

Die jeweilige Spulengruppe kann bei einer weiteren Ausgestaltung eine Einhausung mit Mitteln zur Zu- und Abführung eines Kühlmediums aufweisen. Eine Kühlung der Spulengruppen ist auch mittels Wärmerohr (heat pipe) möglich. Durch die kompakte Anordnung von Kühlrohr und Spule werden unerwünschte Temperaturgradienten über die Flächenausdehnung des Spulenarrays bzw. der jeweiligen Spulenpaare wirksam verhindert.

Zur Aufnahme des Magnetarrays ist bei einer Ausgestaltung der Erfindung der Läufer als Tragkörper mit Hohlräumen ausgebildet.

Zur Gewichtskompensation des Läufers können elektro- und/oder permanentmagnetische Mittel vorgesehen werden. Hier besteht bei einer Ausgestaltung die Möglichkeit, Läufer und Fahrbereich überdeckende ferromagnetische Platten mit dem Stator und permanentmagnetisch erregte Magnetkreise mit dem Läufer zu verbinden und zwischen den ferromagnetischen Platten und den permanentmagnetisch erregten Magnetkreisen einen Luftspaltabstand vorzusehen, wobei die ferromagnetischen Platten bei jeder Lage des Läufers die Polflächen der permanentmagnetisch erregten Magnetkreise vorzugsweise vollständig überdecken.

Ausgestaltend können Läufer- und Fahrbereich überdeckende ferromagnetische Platten mit dem Stator verbunden sein und mit den ferromagnetischen Platten wechselwirkende Elektromagnete ausgebildet werden, wobei zwischen den ferromagnetischen Platten und den Elektromagneten ein Luftspaltabstand besteht und die ferromagnetischen Platten bei jeder Lage des Läufers die Polflächen der Elektromagnete, vorzugsweise vollständig, überdecken.

Für eine definierte Start- oder Ruhelage des Läufers relativ zum Stator in eine hierfür vorgesehene Position sind Referenzsensoren vorhanden.

Das Spulenarray ist bevorzugt im Stator eingebettet und schließt mit der Statoroberfläche im Wesentlichen bündig ab. Als Statormaterial kommt beispielsweise ein Natur- oder Kunststein, insbesondere Granitblock, zur Anwendung.

Die Erfindung soll nachstehend anhand eines Ausführungsbeispiels sowie unter Zuhilfenahme von Figuren näher erläutert werden.

Hierbei zeigen:
- Fig. 1: eine Schnittdarstellung der erfindungsgemäßen Positioniereinrichtung längs der Linie A-A gemäß Fig. 2;
- Fig. 2: eine Draufsicht auf die erfindungsgemäße Anordnung mit erkennbarem Stator, Spulenarray sowie Läufer und darin vorgesehenen Magneten;
- Fig. 3a: eine Anordnung von Magnetbrücken, bestehend aus Magnetelementen und Joch sowie darunter befindlichen Spulen mit angedeuteten Bestromungsrichtungen sowie Kraftvektoren und Polaritäten;
- Fig. 3b: eine Darstellung eines permanentmagnetischen Kreises in Form eines Halbach-Arrays und zugehörigen entsprechend positionierten Spulen mit entsprechenden Bestromungsrichtungen, Kraftvektoren und Polaritäten;
- Fig. 4: eine perspektivische Ansicht der Anordnung von unten unter Weglassung des Statorkörpers bzw. der Statorplatte;
- Fig. 5: eine perspektivische Ansicht von oben mit Blick auf den Läufer und erkennbaren Statorplatten nebst Spulenarray;
- Fig. 6: Draufsicht und perspektivische Ansicht der Positioniereinrichtung mit Anordnung zur Gewichtskompensation des Läufers sowie Teilschnitt längs der Linie A-A der Draufsicht;
- Fig. 7: Darstellungen zur Gewichtskompensation des Läufers gemäß weiterer Ausführungsform mit Läufer- oder Fahrbereich überdeckenden ferromagnetischen Platten, befestigt am Stator, und auf dem Läufer befindlichen Elektromagneten in Draufsicht, perspektivischer Darstellung und Teilschnittdarstellung B-B senkrecht der Linie B gemäß Draufsicht und
- Fig. 8: eine weitere Variante einer Anordnung zur Gewichtskompensation des Läufers mit ferromagnetischen Platten auf dem Läufer und darüber befindlichen, am Stator befestigten Elektromagneten in Draufsicht, perspektivischer Darstellung und Teilschnittdarstellung A-A längs der Linie A-A gemäß der Draufsicht.

Die Positioniereinrichtung gemäß Erfindung und Ausführungsbeispiel geht von einem planaren Spulenarray aus, welches vorzugsweise auf einer Statorplatte angeordnet und befestigt ist. Das Spulenarray besteht aus beispielsweise sechs Flachspulen, die in drei Paaren sternförmig symmetrisch versetzt angeordnet sind.

Im Zentrum der Anordnung befindet sich ein Freiraum, der für die Anordnung eines Messkopfes für die Erfassung von sechs Freiheitsgraden genutzt wird, wobei dieser Messkopf wiederum auf der Statorplatte definiert positioniert ist oder dort kalibrierbar positioniert werden kann.

Zum Spulenarray gehört wenigstens ein Magnetarray, das aus mindestens drei Reihen von wechselseitig polarisierten Magneten besteht, die bei Mittellage des Läufers jeweils mittig zu einem Spulenpaar des Spulenarrays angeordnet sind.

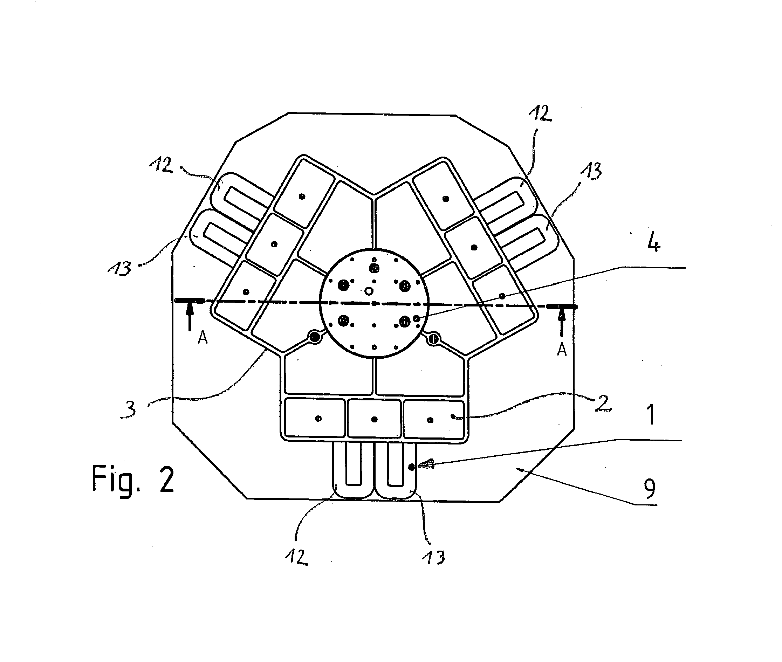

Die Magnetreihen sind, wie z.B. in Fig. 2 erkennbar, in Form einer Dreieckanordnung ausgeführt, an deren Zentrum sich ein weiterer Freiraum befindet.

Dieser Freiraum wird vorzugsweise für die Anordnung eines 6D-Flächenmaßstabs zur flächenhaften Maßverkörperung für das 6D-Messsystem genutzt.

Bei entsprechender Bestromung und Kommutierung eines Spulenpaars des Spulenarrays der Anordnung können durch die magnetische Wechselwirkung in der zugehörigen Reihe des Magnetarrays jeweils horizontale und vertikale Kräfte als auch Momente auf den Läufer eingeprägt werden.

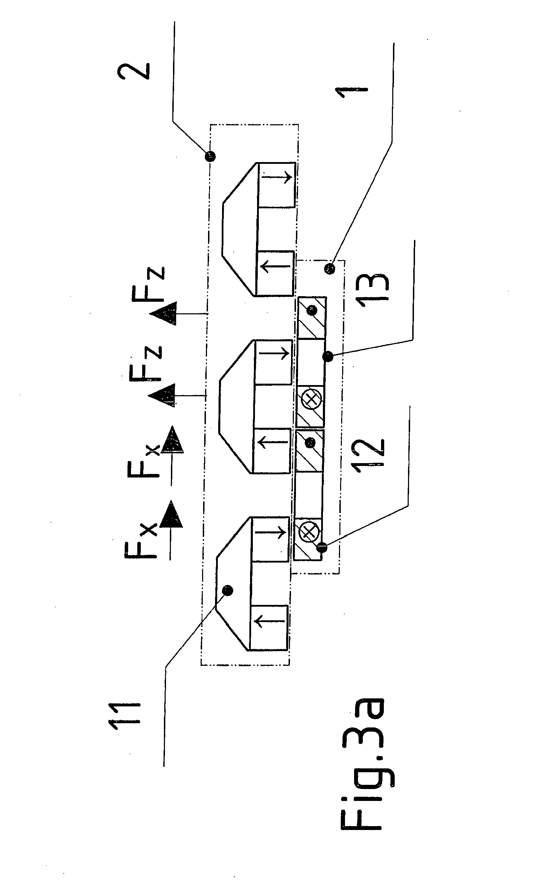

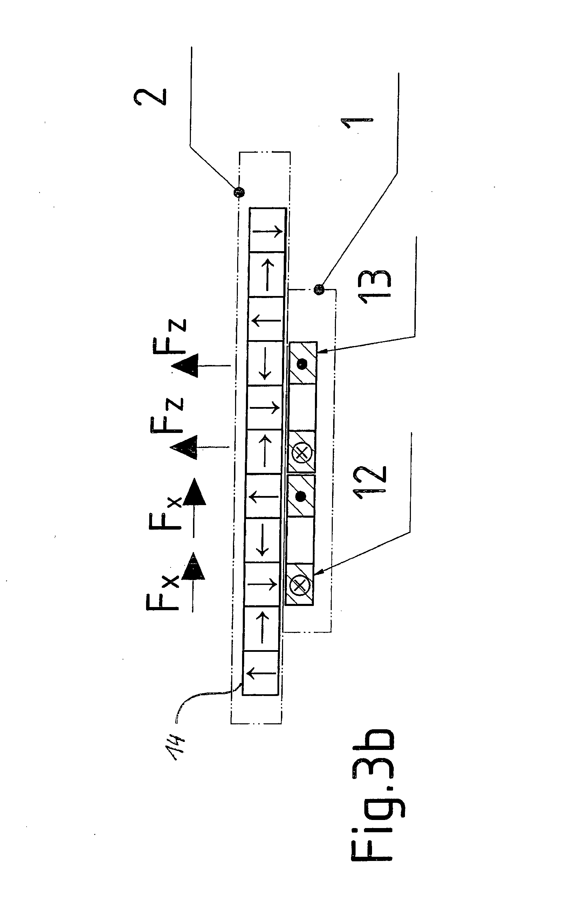

Die Kraftvektoren sind gemäß den Fig. 3a und 3b als Pfeile oberhalb der Magnetbrücken bzw. des Halbach-Arrays dargestellt.

Die vertikalen Komponenten F_{Z} der Kräfte dienen zum Tragen des Läufergewichts und der vertikalen Positionierung. Die horizontalen Kraftkomponenten F_{X} oder F_{Y} (nicht gezeigt) dienen zur horizontalen Beschleunigung und Positionierung.

Bei Außerbetriebnahme der in den Figuren nicht dargestellten Regelung kann der Läufer auf Gleitfüßen abgestellt werden. Die Gleitfüße dienen ebenso bei der Inbetriebnahme der Regelung zum Gleiten des Läufers auf dem Stator während des Abscannens vorhandener Referenzmarken des 6D-Messsystems.

Nach dem Abscannen der Referenzmarken wird die 6D-Regelung in Betrieb genommen. Die erfindungsgemäße Lösung benötigt zum Tragen und zur definierten hochpräzisen 6D-Positionierung des Läufers im Raum vorteilhafterweise nur sechs Aktorelemente, die als Kombination des Spulenarrays und des Magnetarrays zusammengefasst sind.

Die Schnittdarstellung längs der Linie A-A nach Fig. 2 zeigt eine prinzipielle Darstellung der hochauflösenden Positioniereinrichtung. Das Spulenarray 1 ist hier auf einem Stator 9 angeordnet und befestigt. Das Spulenarray 1 besteht aus sechs Flachspulen, die in drei Paaren, sternförmig um jeweils 120° versetzt angeordnet sind (siehe Fig. 2). Jedes Spulenpaar des Spulenarrays 1 umfasst eine erste Spule 12 und eine zweite Spule 13. Die Spulen 12 und 13 können in einer entsprechenden Ausnehmung des Stators eingebettet sein und mit diesem oberflächenbündig abschließen.

Im Zentrum des Spulenarrays 1 befindet sich ein Freiraum 6, in der Beschreibung auch als Spulenarray-Freiraum bezeichnet.

Der Freiraum 6 wird für die Anordnung des 6D-Messkopfes 8 genutzt, der wiederum auf der Statorplatte 9 angeordnet und befestigt ist.

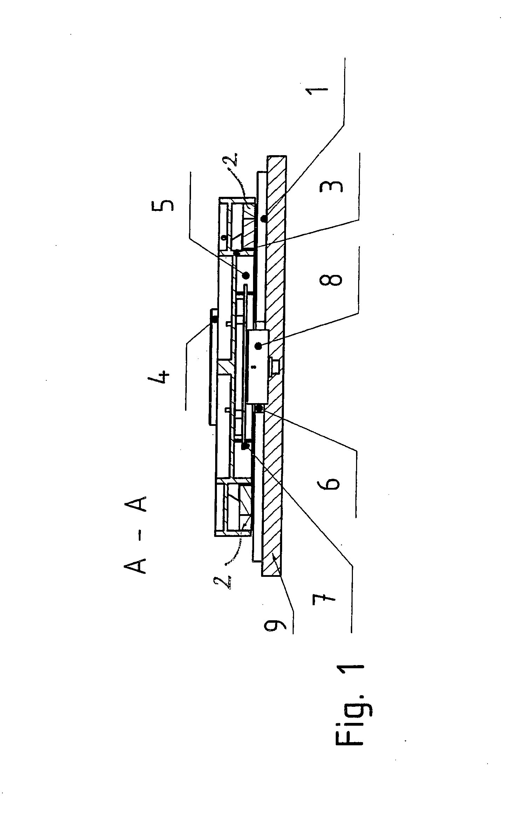

Die Fig. 1 lässt weiterhin den Läufer 3 mit Magnetarray 2 erkennen. Dargestellt sind darüber hinaus der Objektträger 4 und der 6D-Flächenmaßstab 7.

Die Fig. 3a zeigt das zum Spulenarray 1 zugehörige Magnetarray 2. Bei der Ausführungsform nach Fig. 3a wird das Magnetarray 2 aus drei Reihen wechselseitig polarisierter Magnete nebst Magnetbrücke 11 gebildet. Bei Mittellage des Läufers 3 sind die Magnetbrücken 11 jeweils mittig zu den Spulenpaaren des Spulenarrays 1 angeordnet.

Die Fig. 3b zeigt eine Ausführungsform eines Magnetarrays 2 in der Form eines Halbach-Arrays 14, bestehend aus wechselpolarisierten Magneten mit rotierendem Magnetisierungsvektor (angedeutet durch die Pfeildarstellungen).

Die Halbach-Arrays 14 sind bei Mittellage des Läufers 3 jeweils mittig zu den Spulenpaaren des Spulenarrays 1 angeordnet.

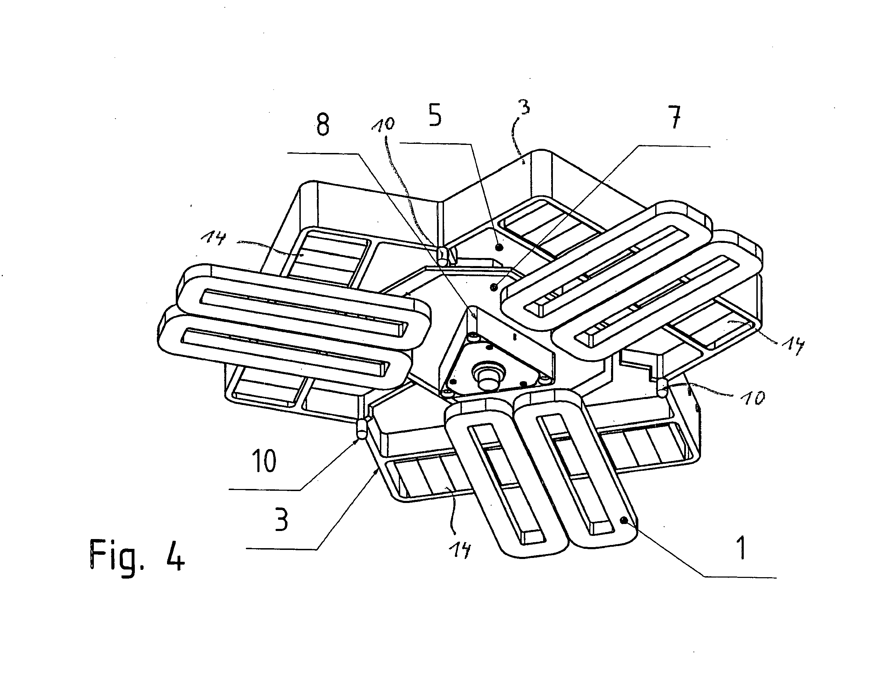

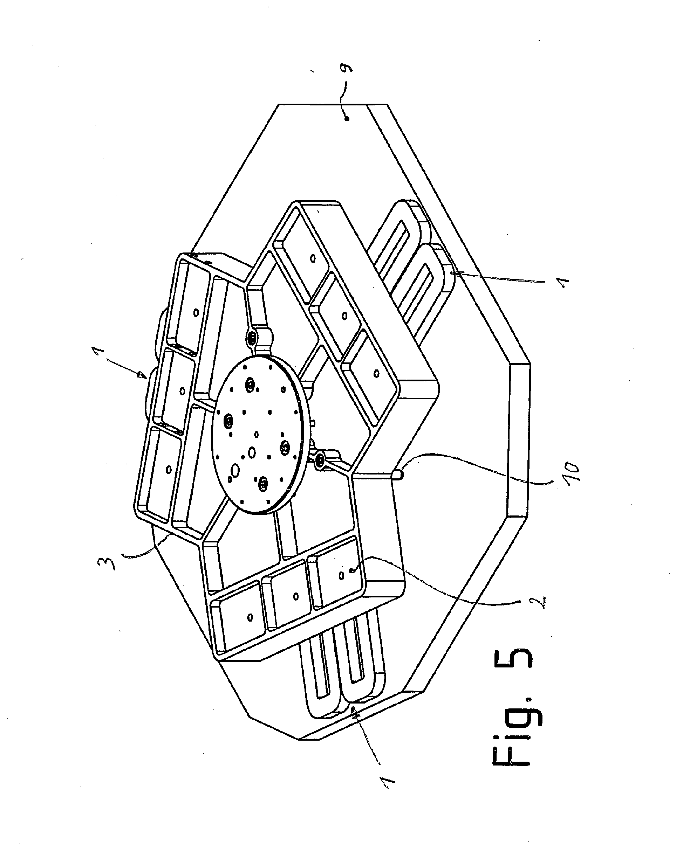

Die Fig. 4 und 5 zeigen perspektivisch dargestellt je drei Magnetreihen, die die Form eines Dreiecks einnehmen. Im Zentrum der Anordnung befindet sich der Freiraum 5, welcher erfindungsgemäß für die Anordnung des 6D-Flächenmaßstabs 7 genutzt wird. Mit dem Bezugszeichen 10 sind die bereits erwähnten Gleitfüße bezeichnet. Die Ansicht von unten nach Fig. 4 unter Weglassung des Stators 9 stellt ein Magnetarray umfassend drei Halbach-Arrays 14 dar. Es sei an dieser Stelle klargestellt, dass mit dem Bezugszeichen 1 z.B. gemäß Fig. 2, 4 oder 5 nicht ein einzelnes Spulenpaar gekennzeichnet ist, sondern hierunter die Anordnung der drei Spulenpaare, umfassend jeweils die Einzelspulen 12 und 13, das Spulenarray bildend, zu verstehen ist.

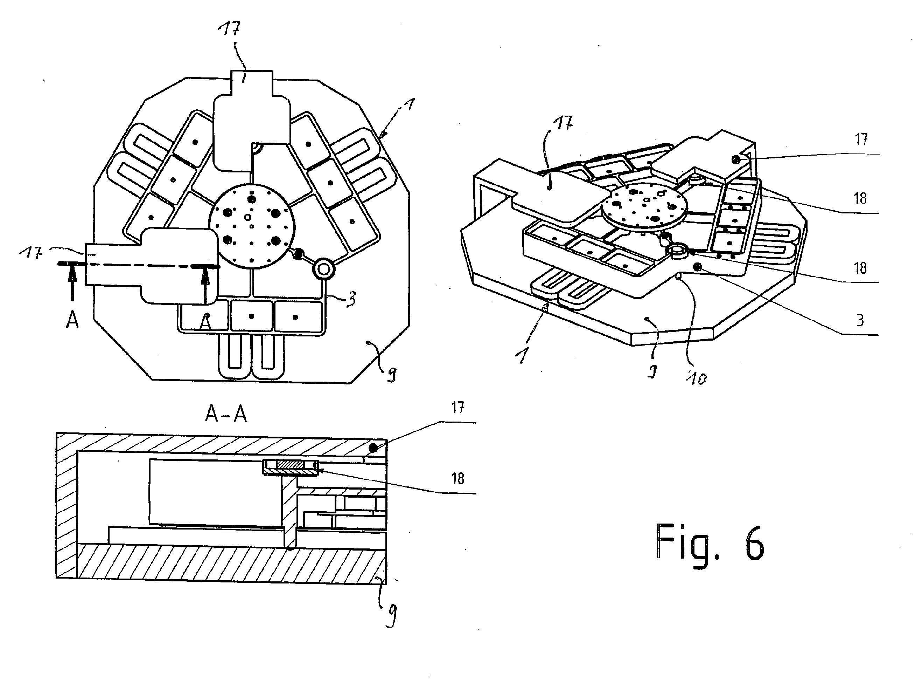

Die Fig. 6 zeigt eine erste Ausführungsform einer Anordnung zur Gewichtskompensation des Läufers 3 mit Läufer- und Fahrbereich überdeckenden ferromagnetischen Platten 17, befestigt am Stator 9, und auf dem Läufer 3 befindlichen permanentmagnetisch erregten Magnetkreisen 18.

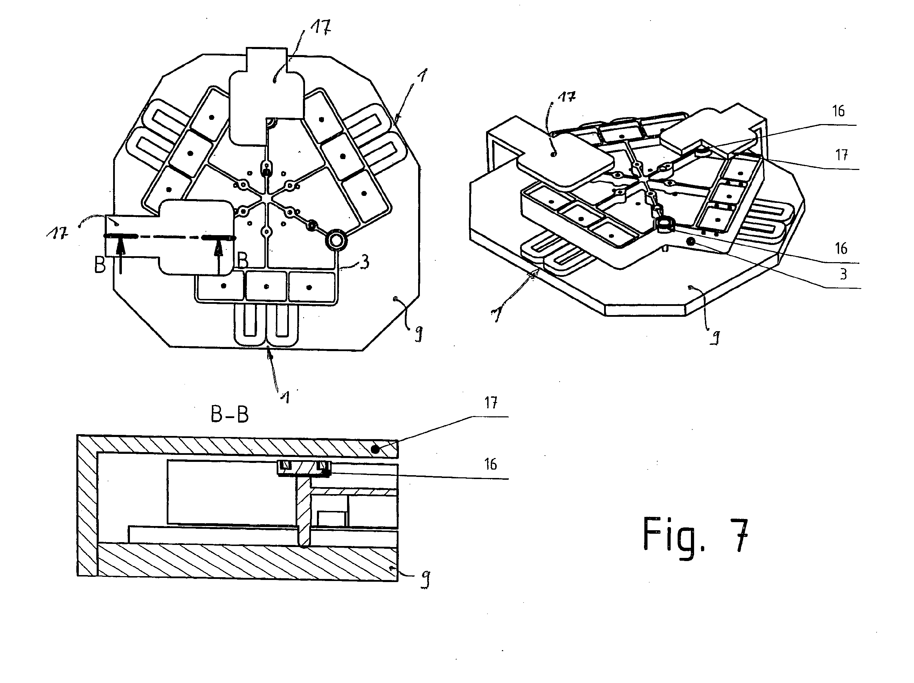

Bei der zweiten Ausführungsform zur Gewichtskompensation, dargestellt anhand der Fig. 7, sind Läufer- und Fahrbereich überdeckende ferromagnetische Platten 17 am Stator befestigt und auf dem Läufer 3 befinden sich Elektromagnete 16.

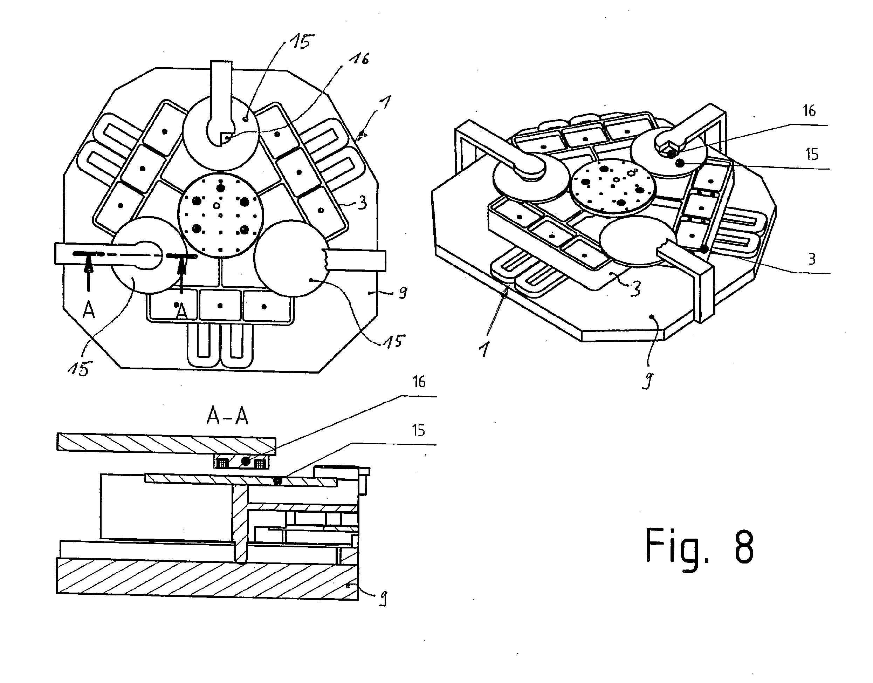

Die dritte Ausführungsform zur Gewichtskompensation des Läufers mit ferromagnetischen Platten 15 auf dem Läufer und darüber befindlichen, am Stator befestigten Elektromagneten 16 zeigen die Abbildungen gemäß Fig. 8.

Bei entsprechender Bestromung und Kommutierung des Spulenpaars können durch die magnetische Wechselwirkung in der zugehörigen Reihe des Magnetarrays 2 jeweils horizontale und vertikale Kräfte als auch Momente auf den Läufer 3 eingeprägt werden.

Die Kraftvektoren sind bei den Fig. 3a und 3b oberhalb der Magnetbrücken bzw. der Halbach-Arrays als Pfeile dargestellt.

Die vertikalen Komponenten der Kräfte dienen zum Tragen des Läufergewichts und zur vertikalen Positionierung. Die horizontalen Kraftkomponenten ermöglichen die horizontale Beschleunigung und Positionierung.

Bei Außerbetriebnahme der Regelung wird der Läufer 3 auf den Gleitfüßen 10 abgestellt. Diese Gleitfüße 10 dienen bei der Inbetriebnahme der Regelung zum Gleiten des Läufers 3 auf dem Stator, insbesondere während des Abscannens von auf dem 6D-Messsystem vorhandenen Referenzmarken.

Zum Tragen und zur definierten hochpräzisen 6D-Positionierung des Läufers im Raum sind, wie in den Fig. 2, 4 und 5 dargestellt, sechs Aktorelemente ausgeführt, die als Kombination des Spulenarrays 1 und des Magnetarrays 2 zusammengefasst sind. Die vorgeschlagene Positioniereinrichtung mit sechsdimensionalem Antrieb kann für unterschiedlichste industrielle und wissenschaftliche Zwecke, aber auch für Inspektionssysteme genutzt werden. Dadurch, dass der Läufer in seiner Bewegung nicht durch z.B. Stromzuführungen oder Ähnliches behindert wird, werden störende Krafteinflüsse ausgeschlossen. Der Läufer selbst ist frei zugänglich, was ebenso auch für den auf dem Läufer befindlichen Objektträger gilt.

Bei einer technisch umgesetzten Positioniereinrichtung liegt der Bewegungsbereich des Läufers horizontal bei ca. 100 mm und es beträgt die Auslenkung in z-Richtung ca. 100 µm bei einer Positioniergenauigkeit von ca. 5 nm.

Für das Halbach-Array kommen speziell Sm₂Co₁₇ Magnete mit einem Magnetisierungsgrad von ca. 28 zum Einsatz. Die einzelnen Segmente wurden verklebt. Die Gesamtanordnung ist UV-tauglich. Der Messkopf umfasst bei einer realisierten Lösung 3D-optische Inkrement-Sensoren mit einer Auflösung von 5 nm in x-y- sowie in Verdrehungsrichtung w. Die eingesetzten kapazitiven Sensoren zur Erfassung von Winkelbewegungen u und v sowie der Auslenkung in vertikaler, d.h. z-Richtung sind paarweise ausgeführt und ermöglichen Auflösungen bis hinunter zu einem Nanometer.

## Patentansprüche

1. Hochauflösende Positioniereinrichtung mit einem Stator (9) und einem Läufer (3), einem auf dem Stator (9) angeordneten Spulenarray (1) mit wenigstens drei Gruppen von Flachspulen, wobei jede Gruppe mindestens zwei Einzelspulen (12,13) als Spulenpaar aufweist und das Spulenarray (1) einen Freiraum (6) auf dem Stator (9) einschließt, weiterhin mit auf, an oder in dem Läufer (3) befindlichen permanentmagnetisch erregten Kreisen (18), welche ein Magnetarray (2) bilden, das ebenfalls einen Freiraum (6) einschließt, wobei die Freiräume (6) ein Positionsmesssystem aufnehmen, das einen Messkopf (8) mit Sensoren und einen Flächenmaßstab (7) besitzt,r
**dadurch gekennzeichnet, dass**
diese als freischwebender, magnetisch geführter sechsdimensionaler Antrieb ausgebildet ist, wobei durch entsprechende Bestromung und Kommutierung eines Spulenpaars des Spulenarrays (1) durch die magnetische Wechselwirkung in der zugehörigen Reihe des Magnetarrays (2) jeweils horizontale und vertikale Kräfte als auch Momente auf den Läufer (3) einprägbar sind und die vertikalen Kräfte dem Tragen des Läufergewichts und der vertikalen Positionierung des Läufers (3) dienen, und die horizontalen Kräfte zur horizontalen Beschleunigung und Positionerung dienen, und die permanentmagnetisch erregten Kreise (18) aus jeweils einem mehrere Segmente umfassenden Halbach-Array (14) bestehen, und sich der Messkopf (8) im Spulenarray-Freiraum und der Flächenmaßstab (7) im Magnetarray-Freiraum befinden sowie der Läufer (3) frei von antriebsrelevanten elektrischen oder elektronischen und diesbezüglich stromführenden Teilen ist.

2. Positioniereinrichtung nach Anspruch 1,
**dadurch gekennzeichnet, dass**
der Messkopf (8) eine an den Spulenarray-Freiraum angepasste, den zur Verfügung stehenden Platz ausnutzende Flächenform besitzt.

3. Positioniereinrichtung nach Anspruch 1 oder 2,
**dadurch gekennzeichnet, dass**
der Messkopf (8) optische Inkrement-Sensoren und kapazitive Sensoren aufweist.

4. Positioniereinrichtung nach Anspruch 3,
**dadurch gekennzeichnet, dass**
die kapazitiven Sensoren im Flächenrandbereich und mindestens ein optischer Sensor im Zentrum des Messkopfes (8) angeordnet sind.

5. Positioniereinrichtung nach Anspruch 3 oder 4,
**dadurch gekennzeichnet, dass**
die kapazitiven Sensoren jeweils aus einem Sensorpaar bestehen, welches den jeweiligen Abstand zur Oberfläche des Flächenmaßstabs (7) erfasst, um hieraus Winkellagen und Bewegungen in z-Richtung zu erfassen.

6. Positioniereinrichtung nach einem der Ansprüche 3 bis 5,
**dadurch gekennzeichnet, dass**
die optischen Sensoren in Verbindung mit dem Flächenmaßstab (7) Bewegungen in x- und y-Richtung und Dreh- oder Gierbewegungen um die z-Richtung erfassen.

7. Positioniereinrichtung nach einem der vorangegangenen Ansprüche,
**dadurch gekennzeichnet, dass**
der Messkopf eine Dreieckform aufweist.

8. Positioniereinrichtung nach einem der vorangegangenen Ansprüche,
**dadurch gekennzeichnet, dass**
die jeweilige Spulengruppe als Baueinheit mit Kühlrohren, eine Sandwichanordnung bildend, ausgeführt ist.

9. Positioniereinrichtung nach Anspruch 8,
**dadurch gekennzeichnet, dass**
die jeweilige Spulengruppe eine Einhausung mit Mitteln zur Zu- und Abführung eines Kühlmediums aufweist.

10. Positioniereinrichtung nach einem der vorangegangenen Ansprüche,
**dadurch gekennzeichnet, dass**
der Läufer (3) als Tragkörper mit Hohlräumen zur Aufnahme des Magnetarrays (2) ausgebildet ist.

11. Positioniereinrichtung nach einem der vorangegangenen Ansprüche,
**dadurch gekennzeichnet, dass**
elektro- und/oder permanentmagnetische Mittel zur Gewichtskompensation des Läufers (3) vorgesehen sind.

12. Positioniereinrichtung nach einem der vorangegangenen Ansprüche,
**dadurch gekennzeichnet, dass**
das Spulenarray (1) drei Spulenpaare aufweist, die dreieckförmig und vorzugsweise um jeweils 120° versetzt zueinander angeordnet sind und das Magnetarray (2) drei Magnetreihen aufweist, wobei die Reihen von Magneten bei Mittellage des Läufers (3) in Bezug auf den Stator (9) jeweils mittig zu einem Spulenpaar befindlich sind.

13. Positioniereinrichtung nach einem der vorangegangenen Ansprüche,
**dadurch gekennzeichnet, dass**
zur Gewichtskompensation des Läufers (3) Läufer- und Fahrbereich überdeckende ferromagnetische Platten (15,17) mit dem Stator (9) und permanent-magnetisch erregte Magnetkreise (18) mit dem Läufer (3) verbunden sind und zwischen den ferromagnetischen Platten (15,17) und den permanentmagnetisch erregten Magnetkreisen (18) ein Luftspaltabstand besteht, wobei die ferromagnetischen Platten (15,17) bei jeder Lage des Läufers (3) die Polflächen der permanentmagnetisch erregten Magnetkreise (18), vorzugweise vollständig, überdecken.

14. Positioniereinrichtung nach einem der Ansprüche 1 bis 12,
**dadurch gekennzeichnet, dass**
zur Gewichtskompensation des Läufers (3) Läufer- und Fahrbereich überdeckende ferromagnetische Platten (15,17) mit dem Stator (9) verbunden sind und mit den ferromagnetischen Platten (15,17) wechselwirkende Elektromagnete (16), mit Läufer (3) verbunden, vorgesehen sind, wobei zwischen den ferromagnetischen Platten (15,17) und den Elektromagneten (16) ein Luftspaltabstand besteht und die ferromagnetischen Platten (15,17) bei jeder Lage des Läufers (3) die Polflächen der Elektromagnete (16), vorzugsweise vollständig, überdecken.

15. Positioniereinrichtung nach einem der vorangegangenen Ansprüche,
**dadurch gekennzeichnet, dass**
für eine definierte Start- oder Ruhelage des Läufers (3) relativ zum Stator (9) eine hierfür vorgesehene Position mittels Referenzsensoren kontrolliert anfahrbar ist.

16. Positioniereinrichtung nach einem der vorangegangenen Ansprüche,
**dadurch gekennzeichnet, dass**
das Spulenarray (1) im Stator (9) eingebettet ist und mit der Statoroberfläche im Wesentlichen bündig abschließt.

## Claims

1. A high-resolution positioning device having a stator (9) and a rotor (3), a coil array (1) arranged on the stator (9), having at least three groups of flat coils, wherein each group has at least two single coils (12, 13) as a coil pair and the coil array (1) encloses a free space (6) on the stator (9), furthermore having permanent-magnetically excited circuits (18) that are situated on, against or in the rotor (3) and form a magnet array (2) which likewise encloses a free space (6), wherein the free spaces (6) accommodate a position measuring system which has a measuring head (8) with sensors and an area scale (7),
**characterized in that**
the positioning device is formed as a freely suspended, magnetically controlled six-dimensional drive, wherein with a corresponding energization and commutation of one coil pair of the coil array (1), horizontal and vertical forces as well as torques can each be imposed on the rotor (3) by the magnetic interaction in the associated row of the magnet array (2), and the vertical forces serve the purpose of carrying the rotor weight and the vertical positioning of the rotor (3), and the horizontal forces serve the horizontal acceleration and positioning, and the permanent-magnetically excited circuits (18) are each composed of a Halbach array (14) comprising a plurality of segments, and the measuring head (8) is situated in the coil array free space and the area scale (7) in the magnet array free space, and the rotor (3) is free of drive-related electrical or electronic and, in this regard, live parts.

2. The positioning device according to claim 1,
**characterized in that**
the measuring head (8) has an area shape adapted to the coil array free space and utilizing the available space.

3. The positioning device according to claim 1 or 2,
**characterized in that**
the measuring head (8) comprises optical incremental sensors as well as capacitive sensors.

4. The positioning device according to claim 3,
**characterized in that**
the capacitive sensors are arranged in the area edge region and at least one optical sensor is arranged in the center of the measuring head (8).

5. The positioning device according to claim 3 or 4,
**characterized in that**
the capacitive sensors are each composed of a pair of sensors which detects the respective distance from the surface of the area scale (7) in order to detect angular positions and movements in the z direction therefrom.

6. The positioning device according to any one of claims 3 to 5,
**characterized in that**
the optical sensors, in conjunction with the area scale (7), detect movements in the x and y directions and rotational or yaw movements about the z direction.

7. The positioning device according to any one of the preceding claims,
**characterized in that**
the measuring head has the shape of a triangle.

8. The positioning device according to any one of the preceding claims,
**characterized in that**
the respective coil group is realized as a structural unit having cooling tubes and forming a sandwich arrangement.

9. The positioning device according to claim 8,
**characterized in that**
the respective coil group comprises an enclosure with means for supplying and discharging a cooling medium.

10. The positioning device according to any one of the preceding claims,
**characterized in that**
the rotor (3) is configured as a supporting body having hollow spaces for receiving the magnet array (2).

11. The positioning device according to any one of the preceding claims,
**characterized in that**
electromagnetic and/or permanent-magnetic means are provided for weight-compensating the rotor (3).

12. The positioning device according to any one of the preceding claims,
**characterized in that**
the coil array (1) comprises three coil pairs which are arranged in a triangular shape and preferably offset from each other in each case by 120°, and the magnet array (2) comprises three magnet rows, wherein the rows of magnets are each situated centered to a coil pair when the rotor (3) is in the center position relative the stator (9).

13. The positioning device according to any one of the preceding claims,
**characterized in that**
for weight-compensating the rotor (3), ferromagnetic plates (15, 17) covering the rotor and travel range are coupled to the stator (9), and permanent-magnetically excited magnet circuits (18) to the rotor (3), and an air gap distance is present between the ferromagnetic plates (15, 17) and the permanent-magnetically excited magnet circuits (18), wherein the ferromagnetic plates (15, 17) cover the pole faces of the permanent-magnetically excited magnet circuits (18) preferably completely in each position of the rotor (3).

14. The positioning device according to any one of claims 1 to 12,
**characterized in that**
for weight-compensating the rotor (3), ferromagnetic plates (15, 17) covering the rotor and travel range are coupled to the stator (9) and electromagnets (16) interacting with the ferromagnetic plates (15, 17) are provided to be coupled to the rotor (3), wherein an air gap distance is present between the ferromagnetic plates (15, 17) and the electromagnets (16), and the ferromagnetic plates (15, 17) cover the pole faces of the electromagnets (16) preferably completely in each position of the rotor (3).

15. The positioning device according to any one of the preceding claims,
**characterized in that**
for a defined start or rest position of the rotor (3) relative to the stator (9), a position provided for this purpose can be moved toward in a controlled manner by means of reference sensors.

16. The positioning device according to any one of the preceding claims,
**characterized in that**
the coil array (1) is embedded in the stator and is essentially flush with the stator surface.

## Revendications

1. Dispositif de positionnement à haute résolution, comprenant un stator (9) et un rotor (3), un réseau de bobines (1) agencées sur le stator (9) avec au moins trois groupes de bobines plates, dans lesquels chaque groupe comprend au moins deux bobines individuelles (12, 13) sous la forme d'une paire de bobines, et le réseau de bobines (1) enferme sur le stator (9) un espace libre (6), comprenant en outre des circuits (18) excités en permanence par voie magnétique, se trouvant sur, contre ou dans le rotor (3) et formant un réseau d'aimants (2), qui enferme également un espace libre (6),
dans lequel les espaces libres (6) logent un système de mesure de position, qui possède une tête de mesure (8) avec des capteurs et un élément de mesure surfacique (7),
**caractérisé en ce que**
celui-ci est réalisé sous la forme d'un entraînement en flottement libre à six dimensions et à guidage magnétique, dans lequel au moyen d'une alimentation électrique et d'une commutation correspondante d'une paire de bobines du réseau de bobines (1) en raison de l'interaction magnétique dans la rangée associée du réseau d'aimants (2) il est possible d'imposer au rotor (3) aussi bien des forces respectives horizontales et verticales que des couples, et les forces verticales servent à porter le poids du rotor et au positionnement vertical du rotor (3) et les forces horizontales servent à l'accélération horizontale et au positionnement, et les circuits (18) excités en permanence par voie magnétique sont constitués respectivement d'un réseau de Halbach (14) qui inclut plusieurs segments, et la tête de mesure (8) se trouve dans l'espace libre du réseau de bobines, et l'élément de mesure surfacique (7) se trouve dans l'espace libre du réseau d'aimants, et le rotor (3) est dépourvu de parties électriques ou électroniques associées à l'entraînement et de parties conduisant le courant à cet égard.

2. Dispositif de positionnement selon la revendication 1,
**caractérisé en ce que** la tête de mesure (8) possède une forme surfacique adaptée à l'espace libre du réseau de bobines et exploitant la place à disposition.

3. Dispositif de positionnement selon la revendication 1 ou 2,
**caractérisé en ce que** la tête de mesure (8) comprend des capteurs optiques incrémentaux et des capteurs capacitifs.

4. Dispositif de positionnement selon la revendication 3,
**caractérisé en ce que** les capteurs capacitifs sont agencés dans la zone de bordure de la surface, et au moins un capteur optique est agencé au centre de la tête de mesure (8).

5. Dispositif de positionnement selon la revendication 3 ou 4,
**caractérisé en ce que** les capteurs capacitifs sont respectivement composés d'une paire de capteurs, laquelle détecte la distance respective jusqu'à la surface de l'élément de mesure surfacique (7), afin de détecter à partir de celle-ci des positions angulaires et des déplacements dans la direction Z.

6. Dispositif de positionnement selon l'une des revendications 3 à 5,
**caractérisé en ce que** les capteurs optiques détectent, en association avec l'élément de mesure surfacique (7), des déplacements dans les directions X et Y, ainsi que des mouvements de rotation ou de lacet autour de la direction Z.

7. Dispositif de positionnement selon l'une des revendications précédentes,
**caractérisé en ce que** la tête de mesure présente une forme en triangle.

8. Dispositif de positionnement selon l'une des revendications précédentes, **caractérisé en ce que** le groupe respectif de bobines est réalisé sous la forme d'unité structurelle avec des tubes de refroidissement en formant un agencement en sandwich.

9. Dispositif de positionnement selon la revendication 8,
**caractérisé en ce que** le groupe respectif de bobine comprend un boîtier avec des moyens pour l'admission et l'évacuation d'un fluide de refroidissement.

10. Dispositif de positionnement selon l'une des revendications précédentes,
**caractérisé en ce que** le rotor (3) est réalisé comme un corps porteur avec des cavités pour recevoir le réseau d'aimants (2).

11. Dispositif de positionnement selon l'une des revendications précédentes,
**caractérisé en ce qu'**il est prévu des organes électromagnétiques ou magnétiques permanents pour la compensation du poids du rotor (3).

12. Dispositif de positionnement selon l'une des revendications précédentes,
**caractérisé en ce que** le réseau de bobines (1) comprend trois paires de bobines, qui sont agencées en formant un triangle et de préférence en décalage de 120° les unes par rapport aux autres, et le réseau d'aimants (2) comprend trois rangées d'aimants, les rangées d'aimants se trouvant, pour une situation médiane du rotor (3) par rapport au stator (9), respectivement au milieu d'une paire de bobines.

13. Dispositif de positionnement selon l'une des revendications précédentes,
**caractérisé en ce que**,
pour la compensation du poids du rotor (3) des plaques ferromagnétiques (15, 17) qui recouvrent la zone du rotor et la zone de déplacement sont reliées au stator (9), et des circuits magnétiques (18) excités en permanence par voie magnétique sont reliés au rotor (3), et il existe entre les plaques ferromagnétiques (15, 17) et les circuits magnétiques (18) excités en permanence par voie magnétique, une distance formant entrefer, et les plaques ferromagnétiques (15, 17) recouvrent, pour toute position du rotor (3), les surfaces polaires des circuits magnétiques (18) excités en permanence par voie magnétique, de préférence entièrement.

14. Dispositif de positionnement selon l'une des revendications 1 à 12,
**caractérisé en ce que**, pour la compensation du poids du rotor (3), des plaques ferromagnétiques (15, 17) qui recouvrent la zone du rotor et la zone de déplacement, sont reliées avec le stator (9), et il est prévu des électroaimants (16) en interaction avec les plaques ferromagnétiques (15, 17) et reliés au rotor (3), dans lequel il existe un écart formant entrefer entre les plaques ferromagnétiques (15, 17) et les électroaimants (16) et, pour toute position du rotor (3), les plaques ferromagnétiques (15, 17) recouvrent les surfaces polaires des électroaimants (16), de préférence entièrement.

15. Dispositif de positionnement selon l'une des revendications précédentes,
**caractérisé en ce que** pour une position de départ ou position de repos du rotor (3) par rapport au stator (9), une position prévue à cet effet est susceptible d'être approchée de manière contrôlée au moyen de capteurs de référence.

16. Dispositif de positionnement selon l'une des revendications précédentes,
**caractérisé en ce que** le réseau de bobines (1) est noyé dans le stator (9), et se raccorde sensiblement en affleurement avec la surface du stator.
